# EUROPÄISCHE PATENTSCHRIFT

(11) **EP 2 855 229 B1**
(45) Veröffentlichungstag und Bekanntmachung des Hinweises auf die Patenterteilung: **01.03.2017**
(21) Anmeldenummer: 13727832.1
(22) Anmeldetag: 24.05.2013
(51) Int. Cl.: A47C 7/26, B60N 2/70, B61D 33/00, B60N 2/24

(54) **SITZ FÜR DEN INNENRAUM EINES ÖFFENTLICHEN VERKEHRSMITTELS MIT FARBLICH GESTALTETER GEWEBELAGE**
SEAT FOR THE INTERIOR OF A PUBLIC MEANS OF TRANSPORT WITH A COLOURED FABRIC LAYER
SIÈGE POUR L'HABITACLE D'UN MOYEN DE TRANSPORT PUBLIC PRÉSENTANT UNE COUCHE DE TISSU À EFFETS DE COULEURS

(30) Priorität: 25.05.2012 DE 102012208914
(43) Veröffentlichungstag der Anmeldung: 08.04.2015
(73) Patentinhaber: Bombardier Transportation GmbH, 10785 Berlin (DE); Rudolf Pützer GmbH, 53229 Bonn (DE)
(72) Erfinder: BURKHARDT, Robert, 02699 Neschwitz (DE); BJARSCH, Eberhard, 02625 Bautzen (DE); PÜTZER, Rudolf, 53229 Bonn (DE)
(74) Vertreter: Patentanwälte Bressel und Partner mbB
(86) Internationale Anmeldenummer: PCT/EP2013/060800
(87) Internationale Veröffentlichungsnummer: WO 2013/175008

(56) Entgegenhaltungen:
- EP-A1- 1 721 732
- DE-A1- 3 702 639

## Beschreibung

Die vorliegende Erfindung betrifft einen Sitz für den Innenraum eines Schienenfahrzeugs mit farblich gestalteter Gewebelage und ein Verfahren zur Herstellung eines solchen Sitzes (siehe z.B. DE 37 02 639 A1, dem Oberbergriff beider unabhängiger Vorrichtungsansprüche 1 und 12 entsprechend).

Bei Fahrzeugen öffentlicher Verkehrsbetriebe existiert die Anforderung nach einem reparaturarmen und insbesondere vandalismusbeständigen Sitz für Fahrgäste. Gleichzeitig sollen die Sitze ein ansprechendes Oberflächenmuster aufweisen, das beispielsweise das Corporate Design eines Verkehrsbetriebes einbezieht.

Als Sitze werden häufig Polstersitze eingesetzt, bei denen ein Kunststoffschaum mit Textilmaterial oder Kunstleder überzogen ist. Diese Polstersitze haben den erheblichen Nachteil, dass sie für Vandalismus anfällig sind, da sie keine ausreichende Schnittfestigkeit und eine erhebliche Feuchtigkeitsaufnahme aufweisen.

Um dieses Problem zu umgehen, werden Sitzelemente aus nicht gepolstertem Kunststoff angeboten. Um haptischen Anforderungen zu genügen, werden Kunststoffsitzelemente teilweise mit Stoff beklebt, wie in DE 10 2005 048 993 A1 angegeben. Dies führt dazu, dass die Sitzelemente eine textile Oberfläche aufweisen und somit höheren haptischen Anforderungen gerecht werden. Nachteilig an diesen bekannten, mit Stoff belegten Sitzelementen ist aber der für sie notwendige hohe manuelle Aufwand, der betrieben werden muss, um ein faltenfreies Anliegen des Stoffes auf dem Sitzelement zu erzielen.

Zur Lösung dieses Problems schlägt die DE 10 2005 048 993 A1 ein Verfahren zur Herstellung eines Sitzelements vor, bei dem ein thermoplastischer Kunststoff in eine Form gespritzt wird, wobei mit dem Kunststoff in der Form ein Gewebe hinterspritzt wird und wobei sich die Fasern des Gewebes mit dem hinterspritzten Kunststoff stoffschlüssig verbinden. Nachteilig bei diesem Verfahren ist jedoch, dass die eingesetzten thermoplastischen Kunststoffe aus Sicht des Brandschutzes unzureichend sind.

Aufgabe der Erfindung war es daher, einen Sitz für den Innenraum eines öffentlichen Verkehrsmittels, insbesondere eines Schienenfahrzeugs, anzugeben, der möglichst vandalismusbeständig ist. Eine weitere Aufgabe war die Bereitstellung eines möglichst brandbeständigen Sitzes. Als weitere Aufgabe sollte der Sitz mit einem farblich gestalteten Dekor versehen sein.

Eine oder mehrere dieser Aufgaben werden durch einen Sitz gemäß Patentanspruch 1 bzw. einen Sitzkörper gemäss Patentanspruch 12 oder durch bevorzugte Ausführungsformen davon, die in den jeweiligen Unteransprüchen angegeben sind, gelöst.

Angegeben wird ein Sitz für den Innenraum eines öffentlichen Verkehrsmittels, insbesondere eines Schienenfahrzeugs, aufweisend einen Sitzkörper aus einem oder mehreren verschiedenen faserverstärkten, insbesondere glasfaserverstärkten, Kunststoff(en), wobei der Sitzkörper eine sichtbare, farblich gestaltete, insbesondere bedruckte, Gewebelage aufweist, die in den Kunststoff oder in einen der verschiedenen Kunststoffe oder in die Kunststoffe vollständig eingebettet ist.

Wenn der Sitzkörper mehrere Kunststoffe aufweist, können diese mehreren Kunststoffe schichtweise angeordnet sein, wie später noch erläutert wird, und/oder die Kunststoffe können als Kunststoffgemisch (Blend, Compound, Polymerlegierung) vorliegen. Die farblich gestaltete Gewebelage kann bei schichtweiser Anordnung verschiedener Kunststoffe in eine der Schichten eingebettet sein, sodass die Gewebelage in einen der verschiedenen Kunststoffe eingebettet ist. Wenn mehrere Kunststoffe als Kunststoffgemisch (Blend, Compound, Polymerlegierung) vorliegen, dann kann die farblich gestaltete Gewebelage in mehrere Kunststoffe gleichzeitig eingebettet sein, also in "die Kunststoffe" eingebettet sein.

Der Begriff "Einbettung" bedeutet, dass die einzelnen Fasern des Gewebes von einer Matrix aus Kunststoff umgeben sind.

Eine Einbettung der Gewebelage kann auf verschiedenste Art und Weise erfolgen. In einer Variante erfolgt eine Einbettung durch Gießen eines zu einem Kunststoff aushärtbaren Reaktionsgemisches auf die Gewebelage und anschließende Aushärtung, wie anhand eines erfindungsgemäßen Verfahrens noch genauer beschrieben. In einer anderen Variante kann eine Gewebelage mittels Druckeinwirkung und/oder Temperatureinwirkung in einen Kunststoff eingebettet werden. Eine Druckeinwirkung kann vorzugsweise auf die Gewebelage erfolgen, eine Temperatureinwirkung vorzugsweise vorwiegend auf den Kunststoff. Bei einer Einbettung durch Druckeinwirkung kann beispielsweise ein härtbarer Kunststoff, insbesondere ein Duroplast, verwendet werden, in den die Gewebelage eingebettet wird. Zum Zeitpunkt der Druckeinwirkung kann beispielsweise der Kunststoff noch nicht, oder noch nicht vollständig, ausgehärtet sein, sodass die Einbettung durch Druckeinwirkung besser möglich ist. Nach Einbettung in die Matrix des noch nicht vollständig gehärteten Kunststoffes kann die Aushärtung erfolgen. Bei einer Einbettung durch Temperatureinwirkung kann beispielsweise ein Kunststoff mit thermoplastischen Eigenschaften verwendet werden, der bei höherer Temperatur erweicht oder schmilzt, wobei in diesem Beispiel die Temperatureinwirkung vorteilhaft mit einer Druckeinwirkung kombiniert werden kann.

Der erfindungsgemäße Sitz hat das gleiche Erscheinungsbild hinsichtlich des Sitzmusters wie ein stoffbezogener oder gepolsterter Fahrgastsitz, der mit einem farblich gestalteten Stoff oder einem farblich gestalteten Polster überzogen ist.

Der Begriff "farblich gestaltet" umfasst einfarbige und mehrfarbige Gestaltungen in beliebiger Kombination, wobei auch die sogenannten "unbunten Farben" schwarz, weiß und dazwischen liegende Graustufen von der Definition mit berücksichtigt sind. Der Begriff "farblich gestaltet" umfasst ferner insbesondere Muster, graphische Gestaltungen, Buchstaben, Schriftzüge, Embleme, Bilder, Logos und anderweitige visuelle Gestaltungsmerkmale.

Die farbliche Gestaltung kann durch Bedrucken, Weben und weitere bekannte Techniken erzeugt sein, wobei eine Bedruckung bevorzugt ist. Die Gewebelage des erfindungsgemäßen Sitzes kann beispielsweise mit einem Muster bedruckt sein, das dem Corporate Design eines Verkehrsbetriebes entspricht oder daran angepasst ist. Die Art der Bedruckung ist auf kein spezielles Druckverfahren beschränkt.

Gegenüber einem nachträglichen Aufbringen eines Musters mittels einer Klebefolie auf einen Sitzkörper stellt die Erfindung in Bezug auf das Design eine nahezu verschleißfreie Lösung dar, weil die farblich gestaltete Gewebelage in den Kunststoff des Sitzkörpers eingebettet ist. Auch gegenüber der denkbaren Lösung, ein Muster auf einen Kunststoffsitz mittels eines Farbspritzverfahrens aufzubringen, zeichnet sich die vorliegende Lösung dadurch aus, dass die Bedruckung nahezu verschleißfrei und abriebfest ist.

Der Sitz ist so ausgestaltet, dass die farblich gestaltete Gewebelage auf der Seite der Sitz- und/oder Rückenfläche des Sitzes angeordnet ist, also an der einem Benutzer zugewandten Seite des Sitzes. Der Sitz ist so ausgestaltet, dass die eingebettete farblich gestaltete Gewebelage sichtbar ist. Dies kann erreicht werden durch Einbettung nahe der Oberfläche des Sitzes und/oder durch Verwendung eines transparenten Kunststoffes, d.h., dort, wo die farblich gestaltete Gewebelage eingebettet ist.

Der erfindungsgemäße Sitz ist nicht nur für den Einsatz in Innenräumen eines öffentlichen Verkehrsmittels, sondern allgemein für öffentliche Bereiche geeignet, beispielsweise Haltestellen, Stadien, Sportstätten, Fußgängerzonen, Flughäfen, Parks etc. Der Sitz kann in freien, vor Wettereinflüssen ungeschützten Bereichen oder in geschlossenen Räumen verwendet werden.

Der Begriff "Sitzkörper" bezeichnet einen Teil eines Sitzes, der unmittelbar zum Sitzen und wahlweise zum Anlehnen des Rückens und/oder der Arme einer Person dient. Zwischen dem Sitzkörper und dem Körper einer sitzenden Person besteht unmittelbarer Kontakt. Ein Beispiel für einen Sitzkörper ist eine Sitzschale. Ein "Sitz" kann weitere Elemente aufweisen, wie Rahmen, Füße, Halterungen, insbesondere zur Befestigung an einem Untergrund, u.a.

Der Sitz weist vorzugsweise als weiteres Element einen Metallrahmen auf, mit dem er in einem Fahrzeug oder im öffentlichen Raum befestigt werden kann. Vorzugsweise wird der Sitzkörper über den Metallrahmen am Rohbau eines Schienenfahrzeuges befestigt.

Bezüglich des Brandschutzes erfüllt der erfindungsgemäße Sitz die Merkmale nach der Brandschutznorm prEN45545 Anforderungsset R17. Die Prüfung der Wärmefreisetzungsrate erfolgt gemäß ISO/TR9705-2. Die Nachweisführung des Materials erfolgt nach dem Anforderungsset R5 gemäß prEN 45545 entsprechend nachfolgender Merkmale, einzeln oder in beliebiger Kombination:
- Wärmefreisetzungsrate - Prüfung gemäß ISO 5660-1
- Rauchentwicklung - Prüfung gemäß ISO 5659-2
- Optische Dichte - Prüfung gemäß ISO 5659-2
- Rauchgastoxizität -Prüfung gemäß ISO 5659-2

Die Fasern der farblich gestalteten Gewebelage können zur Verstärkung des Kunststoffes beitragen, insbesondere wenn der Sitzkörper nur einen Kunststoff aufweist, sodass eine Faserverstärkung auch durch Fasern der farblich gestalteten Gewebelage erfolgt. Wenn der Sitzkörper aus mehreren verschiedenen faserverstärkten Kunststoffen aufgebaut ist und die farblich gestaltete Gewebelage erfindungsgemäss in einen der verschiedenen Kunststoffe vollständig eingebettet ist, dann kann dieser eine der verschiedenen Kunststoffe ausschließlich durch die farblich gestaltete Gewebelage verstärkt sein.

Nicht zu der farblich gestalteten Gewebelage zählende Fasern in einem faserverstärkten Kunststoff bzw. in Kunststoffen können auf verschiedenste Weise angeordnet sein, beispielsweise ungeordnet oder in Form weiterer Gewebelagen, wie unten angegeben.

Der Sitzkörper kann aus mehreren faserverstärkten Kunststoffen aufgebaut sein. Verschiedene faserverstärkte Kunststoffe, vorzugsweise verschiedene Duroplasten, können in dem Sitzkörper schichtweise angeordnet sein. Anders ausgedrückt weist der Sitzkörper dann Schichten aus verschiedenen Kunststoffen auf. Eine der Schichten, vorzugsweise eine äußere Schicht, ist durch Fasern der farblich gestalteten Gewebelage verstärkt.

Hierbei ist der Fall eingeschlossen, dass die Verstärkung ausschließlich durch Fasern der farblich gestalteten Gewebelage erfolgt, also in der Kunststoffschicht, die durch Fasern der farblich gestalteten Gewebelage verstärkt ist, keine weiteren Fasern vorhanden sind. Weitere Kunststoffschichten können durch andere Fasern, insbesondere durch Fasern weiterer Gewebelagen, die vorzugsweise nicht farblich gestaltet sind, verstärkt sein.

In einer speziellen Ausführungsform weist der Sitzkörper unterhalb der farblich gestalteten Gewebelage weitere Gewebelagen innerhalb des Kunststoffs oder innerhalb der Kunststoffe auf, wobei der Kunststoff/die Kunststoffe durch die Fasern der weiteren Gewebelagen faserverstärkt ist/sind.

Der faserverstärkte Kunststoff ist insbesondere ein glasfaserverstärkter Kunststoff (GFK), ein carbonfaserverstärkter Kunststoff (CFK), ein Synthesefaser-verstärkter Kunststoff (SFK). Als Fasern können beispielsweise Glasfasern, Aramidfasern, Kohlenstoff-Nanoröhren (CNT), anorganische Fasern, Metallfasern, metallisierte Synthesefasern, metallisierte anorganische Fasern, Zellulosefasern und Mischungen davon angesetzt werden. Der Kunststoff bildet die polymere Matrix, in welche die Fasern eingelagert sind.

In einer speziellen Ausführungsform ist die farblich gestaltete Gewebelage ein Glasfasergewebe, d.h. ein Gewebe aus Glasfasern. Ein solches Glasfasergewebe ist beliebig mit den oben genannten Gewebelagen und Materialien kombinierbar.

Der Begriff "Kunststoffe" im Plural umfasst bzw. kann bedeuten, ohne darauf beschränkt zu sein:
- Kunststoffgemische (Blends, Compounds, Polymerlegierungen)
- Schichten verschiedener Kunststoffe
- Schichten verschiedener Compounds, was nachfolgend erläutert ist.

Als Kunststoff wird in einer bevorzugten Ausführungsform im Wesentlichen oder gänzlich ein Duroplast oder eine Mischung aus Duroplasten eingesetzt. Bei einer Mischung aus Duroplasten werden die verschiedenen Duroplasten bevorzugt schichtweise angeordnet, um den Sitzkörper in einem schichtweisen Aufbau zu bilden. Demgemäß kann der Sitzkörper Schichten aus verschiedenen faserverstärkten Kunststoffen, insbesondere Duroplasten, aufweisen, wie anhand eines speziellen Herstellungsverfahrens nachfolgend noch beschrieben wird. Ein Sitzkörper, der im Wesentlichen aus Duroplast oder einer Mischung aus Duroplasten besteht, kann zusätzlich zu dem Duroplast/den Duroplasten weitere Kunststofftypen aufweisen, wie beispielsweise Thermoplaste oder Elastomere.

Auch aus einem einzigen Kunststoff, insbesondere einem Duroplast, kann der Sitzkörper schichtweise aufgebaut werden, wie anhand eines speziellen Herstellungsverfahrens nachfolgend noch beschrieben. Demgemäß kann der Sitzkörper Schichten aus dem gleichen faserverstärkten Kunststoff, insbesondere Duroplast, aufweisen.

In dem Sitz können verschiedene Kunststoffe nicht schichtweise gemischt sein, was zusätzlich zu einem schichtweisen Aufbau des Sitzkörpers aus gleichen oder verschiedenen Kunststoffen der Fall sein kann. Beispielsweise können Kunststoffe in Form von Kunststoffgemischen (Blends, Compounds) vorliegen, auch innerhalb einer Schicht. Beispielsweise ist ein schichtweiser Aufbau aus gleichen oder verschiedenen Kunststoffgemischen möglich.

Der Kunststoff/die Kunststoffe können ein Flammschutzmittel aufweisen. Das Flammschutzmittel ist in üblichen Konzentrationen enthalten. Das Flammschutzmittel weist vorzugsweise Graphit, insbesondere Quellgraphit oder Nanographit, oder graphitische Nanofasern auf oder besteht daraus. Diese Substanzen haben den Vorteil, dass sie ungiftig sind. Ansonsten können auch übliche Flammschutzmittel eingesetzt werden, wie anorganische, halogenierte, Organophosphor- oder Stickstoff-basierte Flammschutzmittel.

Der Begriff "Duroplast" bezeichnet einen Kunststoff, der nach Aushärtung nicht mehr verformt werden kann. Im Allgemeinen handelt es sich dabei um harte, glasartige Polymerwerkstoffe, die dreidimensional vernetzt sind. Insbesondere wird als Duroplast ein Kunstharz verwendet. Nach DIN 55958 werden Kunstharze durch Polymerisations-, Polyadditions- oder Polykondensationsreaktionen hergestellt. Beispiele für Kunstharze, die in der vorliegenden Erfindung Verwendung finden können, sind Harnstoffharze, Alkydharze, Epoxidharze, Melaminharze, Phenolharze, Polyesterharze, Polyurethanharze, Polyamidharze und Vinylesterharze, wobei Polyesterharz besonders vorteilhaft ist.

In einer speziellen Ausführungsform wird die äußere Schicht des Sitzkörpers durch ein Polyesterharz gebildet, worin die farblich gestaltete Gewebelage eingebettet ist. Polyesterharz kommt aus Gründen des Brandschutzes vorzugsweise zum Einsatz.

Auf der Seite der farblich gestalteten Gewebelage des Sitzkörpers kann eine Schutzschicht aufgebracht sein, beispielsweise eine Antihaftschicht zur Verhinderung der Anhaftung von Graffiti. Eine Schutzschicht kann dem zusätzlichen Brandschutz dienen, indem sie beispielsweise aus einem besonders brandbeständigen Material ist. Ferner sind Schutzschichten denkbar, die eine relativ hohe Härte aufweisen, um einem Verschleiß des Sitzes oder mutwilliger Beschädigung durch harte Gegenstände entgegenzuwirken. Die Schutzschicht kann eine oder mehrere dieser Eigenschaften aufweisen. Die Schutzschicht ist vorzugsweise durchsichtig, sodass eine Betrachtung der farblich gestalteten Gewebelage möglich ist. Ein beispielhaftes Material für die Schutzschicht ist ein Kunststoff, vorzugsweise Polyester.

Der Sitzkörper kann einstückig ausgeführt sein, beispielsweise in Form einer Sitzschale, und eine Sitzfläche und eine Lehne aufweisen. In einer anderen Variante ist der Sitzkörper mehrteilig ausgeführt. Mehrere Teile, beispielsweise eine Sitzfläche und eine Rückenlehne, können durch Gelenke oder Scharniere miteinander verbunden sein, wobei der mehrteilige Sitzkörper klappbar ausgestaltet sein kann.

In einem weiteren Aspekt gemäss Patentanspruch 13 betrifft die Erfindung ein Schienenfahrzeug, aufweisend einen Sitz wie zuvor beschrieben.

Das Schienenfahrzeug ist insbesondere eine Straßenbahn, vorzugsweise eine Niederflurstraßenbahn, ein Nahverkehrszug, eine Stadtbahn oder eine S-Bahn.

Ebenso ist der erfindungsgemäße Sitz aber auch in Bussen und anderweitigen Kraftfahrzeugen des öffentlichen Nahverkehrs, die nicht schienengebunden sind, einsetzbar.

In noch einem Aspekt gemäss Patentanspruch 15 betrifft die Erfindung ein Verfahren zur Herstellung eines Sitzkörpers, aufweisend die folgenden Schritte
a) Einlegen einer farblich gestalteten oder einer nicht farblich gestalteten Gewebelage in eine Negativform des Sitzkörpers und Anpassung der Gewebelage an die Negativform,
b) Gießen eines flüssigen, zu einem Duroplast härtbaren Reaktionsgemisches auf die Gewebelage, sodass die Gewebelage in das Reaktionsgemisch eingebettet wird,
c) ein- oder mehrmalige Wiederholung der Schrittfolge a) und b), wobei
   - gleiche oder verschiedene Reaktionsgemische eingesetzt werden, und
   - als letzte Gewebelage eine farblich gestaltete Gewebelage eingelegt wird, wenn bei erstmaliger Durchführung des Schrittes a) eine nicht farblich gestaltete Gewebelage in die Negativform eingelegt wurde,
d) Aushärtung des/der Reaktionsgemische(s) zu einem faserverstärkten Duroplast.

Mit dem Verfahren können insbesondere Sitzkörper hergestellt werden, wie zuvor anhand des erfindungsgemäßen Sitzes beschrieben, wobei alle anhand des erfindungsgemäßen Sitzes beschriebenen speziellen Merkmale durch das Verfahren verwirklicht werden.

Bei der Verwendung gleicher Reaktionsgemische erhält man einen Sitzkörper, der Schichten aus dem gleichen faserverstärkten Kunststoff aufweist. Bei der Verwendung verschiedener Reaktionsgemische erhält man einen Sitzkörper, der Schichten aus verschiedenen faserverstärkten Kunststoffen aufweist.

Bei dem erfindungsgemäßen Verfahren kann die Anpassung der Gewebelage an die Negativform, d.h. an die Oberfläche der Negativform, per Hand oder mittels eines Werkzeugs erfolgen. Es wird angestrebt, dass sich die Gewebelage so genau wie möglich an die Oberfläche der Negativform anpasst. Die Anpassung erfolgt zumindest an die Oberflächen der Negativform, welche die Oberflächen einer späteren Sitzfläche oder Rückenlehne darstellen. Randbereiche der Negativform, die Randbereiche des späteren Sitzkörpers abbilden, können ebenfalls mit Gewebe belegt werden oder wahlweise auch nicht mit Gewebe belegt werden.

Das zu einem Duroplast härtbare flüssige Reaktionsgemisch weist alle Komponenten auf, die zur Herstellung des Duroplasten erforderlich sind. Wenn der Duroplast ein Kunstharz ist, wie oben beschrieben, beispielsweise ein Polyesterharz, ein Epoxidharz, ein Melaminharz etc., dann enthält das Reaktionsgemisch die Ausgangsstoffe, die zur Bildung eines solchen duroplastischen Harzes üblich sind. Diese Bestandteile sind aus dem Stand der Technik bekannt und bedürfen keiner näheren Beschreibung.

In Schritt b) des Verfahrens wird die Gewebelage vollständig in das Reaktionsgemisch eingebettet. Erfindungsgemäss erfolgt die vollständige Einbettung in das flüssige Reaktionsgemisch bzw. in den daraus resultierenden Duroplasten. Der Begriff "Einbettung" bedeutet, dass die einzelnen Fasern des Gewebes von einer Matrix aus Duroplast, insbesondere Kunstharz, umgeben sind.

Die Schritte a), Einlegen einer Gewebelage, und b), Gießen eines flüssigen Reaktionsgemisches auf die Gewebelage, kann mehrmals wiederholt werden, sodass eine Schichtung von Gewebelagen erhalten wird, die jeweils im Reaktionsgemisch eingebettet sind. Wenn das Reaktionsgemisch mit eingebetteter Gewebelage ausgehärtet ist, resultiert eine Schicht aus faserverstärktem Kunststoff, hier im speziellen eine Schicht aus einem faserverstärkten Duroplast.

Die in Schritt d) beschriebene Aushärtung der Reaktionsgemische zu einem faserverstärkten Duroplast kann bereits während der Schichtung einzelner Gewebelagen und des Gießens neuen flüssigen Reaktionsgemisches auf die zuletzt aufgebrachte Gewebelage erfolgen. D.h., dass ein flüssiges Reaktionsgemisch, das auf eine zuvor eingelegte Gewebelage gegossen wurde, bereits aushärten kann, wenn eine weitere Gewebelage eingelegt wird. Es kann auch eine teilweise oder vollständige Aushärtung des Reaktionsgemisches, welches auf eine zuvor eingebrachte Gewebelage gegossen wurde, abgewartet werden, bevor eine weitere Gewebelage aufgelegt und ihrerseits mit neuem flüssigem Reaktionsgemisch übergossen wird. Der Aushärtungsprozess kann durch die Zusammensetzung des Reaktionsgemisches, beispielsweise durch die Wahl von Art und Menge eines Härters, gesteuert werden. Auf diese Art und Weise können auch bei verschiedenen Gewebelagen verschiedene Reaktionsgemische eingesetzt werden, sodass man Schichten aus verschiedenen faserverstärkten Kunststoffen, hier Duroplasten, erhält. Die im Schritt d) beschriebene Aushärtung ist somit nicht zwingend ein Vorgang, der erst nach Durchführung der zuvor genannten Schritte a) bis c) stattfindet, sondern ein Vorgang, der bereits während der Durchführung der zuvor genannten Schritte stattfinden kann, z.B. während des Schrittes b) und während einer Wiederholung des Schrittes b) stattfinden kann.

Als Verfahrensprodukt erhält man einen Sitzkörper, der im Inneren einer duroplastischen Matrix mehrere Gewebelagen aufweist. Bei dem Verfahren kann die farblich gestaltete Gewebelage als erste und/oder als letzte Gewebelage verarbeitet werden, sodass sie unter einer Oberfläche des Sitzkörpers und/oder auf der Rückseite des Sitzkörpers angeordnet und sichtbar ist. Demgemäß ist eine äußere Kunststoffschicht durch Fasern der farblich gestalteten Gewebelage verstärkt. Die farblich gestaltete Gewebelage wird als erstes eingelegt, wenn die betreffende Oberfläche der Negativform, auf welche die farblich gestaltete Gewebelage gelegt wird, die Oberfläche des Sitzkörpers abbildet, welche dem Benutzer zugewandt ist, insbesondere die Oberfläche einer Rückenlehne oder eines Sitzes. Bildet die Oberfläche der Negativform, auf welche die erste Gewebelage gelegt wird, die Rückseite des Sitzkörpers ab, die dem Benutzer abgewandt ist, dann kann eine nicht farblich gestaltete Gewebelage eingelegt werden. Somit kann in dem Verfahren als letzte Gewebelage eine nicht farblich gestaltete Gewebelage eingelegt werden, wenn zuvor in Schritt a) eine farblich gestaltete Gewebelage eingelegt wurde, oder eine ebenfalls farblich gestaltete Gewebelage. Vorzugsweise bildet die Oberfläche der Negativform, auf welche die erste Gewebelage gelegt wird, die dem Benutzer zugewandte Oberfläche des Sitzkörpers ab. Dadurch wird die dem Benutzer zugewandte Oberfläche des Sitzkörpers, die sogenannte "Gutseite", genau ausgeformt. Für den Herstellungsprozess kann ein geteiltes Werkzeug verwendet werden, je nach Form des herzustellenden Sitzkörpers.

Nachfolgend wird die Erfindung anhand von Ausführungsbeispielen beschrieben. Es zeigen:
- Fig. 1: einen erfindungsgemäßen Sitzkörper im Querschnitt, betrachtet von der Seite,
- Fig. 2: einen erfindungsgemäßen Sitzkörper in einer Ansicht von schräg oben.
- Fig. 3: einen weiteren erfindungsgemäßen Sitzkörper, betrachtet schräg von oben,

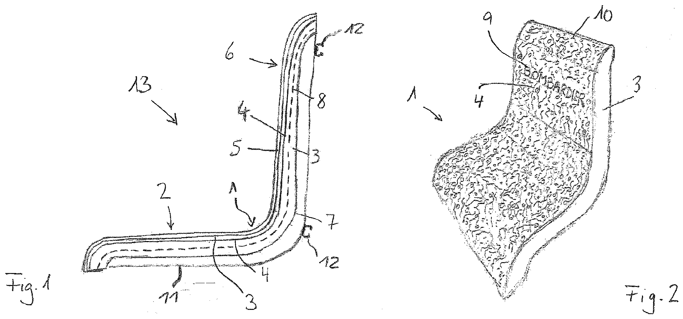

Die Fig. 1 zeigt einen Sitz 13 mit einem Sitzkörper 1 der einstückig ausgeführt ist und eine Sitzfläche 2 und eine Rückenlehne 6 aufweist. Der Sitzkörper 1 besteht größtenteils aus Kunststoff 3, insbesondere duroplastischem Kunstharz, in welchem eine bedruckte Gewebelage 4 eingebettet ist. Die bedruckte Gewebelage 4 ist nahe der benutzerseitigen Oberfläche des Sitzkörpers 1 angeordnet, in diesem Fall unterhalb der Oberfläche der Sitzfläche 2 und unterhalb der Oberfläche der Lehne 6. Wie unter anderem bei der Sitzfläche 2 erkennbar, befindet sich oberhalb der bedruckten Gewebelage 4 noch weiterer Kunststoff 3, wobei die Menge des Kunststoffs 3 oberhalb der Gewebelage 4 hier etwas übertrieben dargestellt ist, um die Einbettung der Gewebelage 4 in den Kunststoff zu verdeutlichen. Jedenfalls ist die bedruckte Gewebelage 4 von außen sichtbar, wie in der Fig. 2 gezeigt. Zwischen der bedruckten Gewebelage 4 und der Rückseite 7 des Sitzkörpers 1 befinden sich innerhalb des Kunststoffs 3 weitere Gewebelagen, von denen eine Gewebelage 8 beispielhaft als gestrichelte Linie gezeigt ist. Die Sitzfläche 2 und die Rückenlehne 6 sind oberseitig mit einer Schutzschicht 5 versehen, die auf den Kunststoff 3 aufgetragen ist. Die Schutzschicht 5 schützt den darunter liegenden Kunststoff 3 und das nahe unter der Oberfläche des Kunststoffs 3 befindliche Gewebe 4. Über einen Stahlrahmen 11 wird der Sitzkörper 1 an dem Fahrzeug befestigt. Vorzugsweise über C-Schienen 12.

In der Fig. 2 ist bei einem Blick auf den Sitzkörper 1 von schräg oben die Bedruckung der bedruckten Gewebelage 4 sichtbar. Sowohl die in Fig. 1 gezeigte Schutzschicht 5 als auch der Kunststoff 3, insbesondere ein Kunstharz, sind ausreichend transparent, sodass die Bedruckung der Gewebelage 4 sichtbar ist. Die Gewebelage 4 ist mit einem Muster 10 und einem Schriftzug 9 bedruckt. Weitere individuelle visuelle Gestaltungsmerkmale sind denkbar. Die Gestaltungsmerkmale können reproduzierbar und nicht zufällig angeordnet sein. Der Kunststoffsitz zeichnet sich durch eine hohe Vandalismusbeständigkeit und ein verzögertes Brandverhalten aus und ist daher für den Einsatz in Nahverkehrsfahrzeugen, aber auch in anderen öffentlichen Bereichen geeignet.

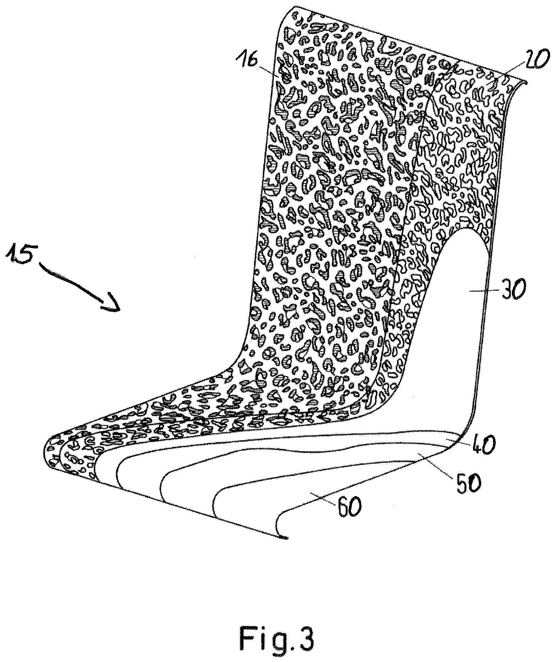

In Fig. 3 ist ein weiterer erfindungsgemäßer Sitzkörper 15 dargestellt. Unter einer Schutzschicht 16 befindet sich ein bedrucktes Glasfasergewebe 20. Die Schutzschicht 16, hier bezeichnet als "Gelcoat" ist transparent und damit ist das Muster des darunter liegenden bedruckten Gewebes 20 sichtbar. Dort wo die Schutzschicht eingezeichnet ist, ist das darunter liegende Muster des Gewebes 20 teilweise schraffiert dargestellt, um zeichnerisch anzudeuten, dass eine Schutzschicht über dem Gewebe und der Schicht 30 liegt. Das Muster des Gewebes 20 präsentiert sich dem Betrachter tatsächlich aber unverändert, da die Schutzschicht 16 transparent ist.

Das bedruckte Glasfasergewebe 20 kann mittels Druckanwendung und/oder Temperatureinwirkung auf eine Kunststoffschicht 30 aufgebracht sein, sodass der Kunststoff der Schicht 30 das Gewebe 20 durchdringt bzw. das Gewebe 20 in den Kunststoff eingebettet ist. Dadurch wird die Kunststoffschicht 30 mittels des Gewebes 20 faserverstärkt. Es kann stattdessen die Kunststoffschicht 30 auch durch Gießen hergestellt sein, wie unten noch beschrieben. Gleichzeitig dient die Kunststoffschicht 30 der Bindung des Gewebes 20 an eine darunter liegende Kunststoffschicht 40, wobei durch Druck- und/oder Temperaturanwendung eine Haftung der Kunststoffschicht 30 auf der Kunststoffschicht 40 erreicht werden kann. Die Kunststoffe 30 und 40 sind verschieden, haben aber vorzugsweise ähnliche chemische und/oder physikalische Eigenschaften. Es ist alternativ möglich, dass die Kunststoffe 30, 40 vom chemischen Aufbau her identisch sind.

Der Sitzkörper 15, oder ein Sitzkörper mit analogem Aufbau, kann mit einem Verfahren hergestellt sein, wie in der allgemeinen Beschreibung angegeben, wobei die Kunststoffe 30, 40, 60 gleiche oder verschiedene Duroplasten sind. Die Duroplasten 40 und 60 sind vorzugsweise gleich und enthalten vorzugsweise Brandschutzzusätze. Es kann eine Gewebelage 70, hier nicht dargestellt, in eine Negativform des Sitzkörpers 15 eingelegt werden und die Gewebelage 70 an die Negativform angepasst werden. Anschließend wird ein flüssiges, zu einem Duroplast 60 härtbares Reaktionsgemisch auf die Gewebelage 70 gegossen, sodass die Gewebelage 70 in das Reaktionsgemisch eingebettet wird. Alternativ kann die Gewebelage 70 weggelassen werden und nur ein flüssiges, zu einem Duroplast 60 härtbares Reaktionsgemisch in die Form gegossen werden. Nach Härtung oder teilweiser Härtung der Schicht 60 wird eine Gewebelage 50 aufgebracht. Anschließend wird ein flüssiges, zu einem Duroplast 40 härtbares Reaktionsgemisch auf die Gewebelage 50 gegossen, sodass die Gewebelage 50 in dieses Reaktionsgemisch eingebettet wird. Danach wir das Gemisch zur dem Duroplast 40 gehärtet. Weitere, hier nicht dargestellte Gewebelagen und Reaktionsgemische können abwechselnd aufgebracht und gehärtet werden.

Nach Härtung oder teilweiser Härtung zu einer Schicht 40 kann die bedruckte Gewebelage 20 darauf aufgebracht werden. Auf die bedruckte Gewebelage 20 kann wiederum ein flüssiges, zu einem Duroplast 30 härtbares Reaktionsgemisch gegossen werden und ausgehärtet werden. In der Darstellung der Fig. 3 scheint es, als ob die Gewebelage 20 auf der Schicht 30 liegt, aber in der dargestellten Herstellungsvariante ist die Gewebelage 20 in den Duroplast 30 eingebettet. Zum Schluss wird die Schutzschicht 16 aufgebracht.

Alternativ kann zuerst eine Schicht 30 auf die Schicht 40 aufgebracht werden. Die Schicht 30 muss dann kein Duroplast sein, der aus einem Reaktionsgemisch durch Härtung hergestellt ist. Stattdessen kann beispielsweise als Schicht 30 ein Thermoplast oder ein anderweitiger schmelzbarer Kunststoff verwendet werden. Das bedruckte Glasfasergewebe 20 kann mittels Druckanwendung, und vorzugsweise auch durch Temperatureinwirkung, auf die Schicht 30 aufgebracht werden, sodass der Kunststoff der Schicht 30 das Gewebe 20 durchdringt bzw. das Gewebe 20 in den Kunststoff 30 eingebettet ist. Anschließend kann die Schutzschicht 16 aufgebracht werden.

## Patentansprüche

1. Sitz (13) für den Innenraum eines öffentlichen Verkehrsmittels, insbesondere eines Schienenfahrzeugs, aufweisend einen Sitzkörper (1; 15) aus einem oder mehreren verschiedenen faserverstärkten, insbesondere glasfaserverstärkten, Kunststoff(en) (3; 30, 40, 60), wobei der Sitzkörper eine sichtbare, farblich gestaltete, insbesondere bedruckte, Gewebelage (4; 20) aufweist, **dadurch gekennzeichnet, dass** die Gewebelage (4; 20) in den Kunststoff (3), oder in einen der verschiedenen Kunststoffe (30), oder in die Kunststoffe vollständig eingebettet ist.

2. Sitz nach Anspruch 1, wobei der Sitzkörper (1; 15) unterhalb der farblich gestalteten Gewebelage (4; 20) weitere Gewebelagen (8; 50) innerhalb des Kunststoffs (3, 40) oder innerhalb der Kunststoffe aufweist, wobei der Kunststoff/die Kunststoffe (3, 40) durch die Fasern der weiteren Gewebelagen (8; 50) faserverstärkt ist/sind.

3. Sitz nach einem der vorangehenden Ansprüche, wobei die farblich gestaltete Gewebelage (4; 20) ein Glasfasergewebe ist.

4. Sitz nach einem der vorangehenden Ansprüche, wobei der Kunststoff/die Kunststoffe (3; 40, 60) im Wesentlichen ein Duroplast ist/Duroplasten sind.

5. Sitz nach einem der vorangehenden Ansprüche, wobei der Sitzkörper (15) Schichten (30, 40) aus dem einen faserverstärkten Kunststoff oder aus den verschiedenen faserverstärkten Kunststoffen (30, 40) aufweist.

6. Sitz nach Anspruch 5, wobei eine der Schichten (30), vorzugsweise eine äußere Schicht, durch Fasern der farblich gestalteten Gewebelage (20) verstärkt ist.

7. Sitz nach einem der vorangehenden Ansprüche, wobei die farblich gestaltete Gewebelage (4; 20) in ein Polyesterharz eingebettet ist.

8. Sitz nach einem der vorangehenden Ansprüche, wobei der Kunststoff oder einer der Kunststoffe oder die Kunststoffe ein Flammschutzmittel aufweist/aufweisen.

9. Sitz nach einem der vorangehenden Ansprüche, wobei auf den Kunststoff (3), auf einen der Kunststoffe (30), oder auf die Kunststoffe des Sitzkörpers (1) auf Seite der farblich gestalteten Gewebelage (4; 20) eine Schutzschicht (5) aufgebracht ist.

10. Sitz nach einem der vorangehenden Ansprüche, wobei der Sitzkörper (1; 15) einstückig ist und einen Sitz (2) und eine Lehne (6) aufweist.

11. Sitz nach einem der Ansprüche 1-9, wobei der Sitzkörper mehrteilig, insbesondere klappbar ist.

12. Sitzkörper (1; 15) aus einem oder mehreren faserverstärkten, insbesondere glasfaserverstärkten, Kunststoff(en) (3; 30, 40, 60), wobei der Sitzkörper eine sichtbare, farblich gestaltete, insbesondere bedruckte, Gewebelage (4; 20) aufweist, **dadurch gekennzeichnet, dass** die Gewebelage (4; 20) in den Kunststoff (3), oder in einen der Kunststoffe (30), oder in die Kunststoffe vollständig eingebettet ist.

13. Schienenfahrzeug, aufweisend einen Sitz wie in einem der Ansprüche 1-11 beschrieben, oder einen Sitzkörper wie in Anspruch 12 beschrieben.

14. Verwendung eines Sitzes wie in einem der Ansprüche 1-11 beschrieben, oder eines Sitzkörpers wie in Anspruch 12 beschrieben, für öffentliche Verkehrsmittel oder den öffentlichen Raum.

15. Verfahren zur Herstellung eines Sitzkörpers, aufweisend die folgenden Schritte:
a) Einlegen einer farblich gestalteten Gewebelage (4) oder einer nicht farblich gestalteten Gewebelage in eine Negativform des Sitzkörpers (1) und Anpassung der Gewebelage an die Negativform,
b) Gießen eines flüssigen, zu einem Duroplast härtbaren Reaktionsgemisches auf die Gewebelage (4), sodass die Gewebelage in das Reaktionsgemisch eingebettet wird,
c) ein- oder mehrmalige Wiederholung der Schrittfolge a) und b), wobei
- gleiche oder verschiedene Reaktionsgemische eingesetzt werden, und
- als letzte Gewebelage eine farblich gestaltete Gewebelage (4) eingelegt wird, wenn bei erstmaliger Durchführung des Schrittes a) eine nicht farblich gestaltete Gewebelage in die Negativform eingelegt wurde,
d) Aushärtung des/der Reaktionsgemische(s) zu einem faserverstärkten Duroplast.

## Claims

1. A seat (13) for the interior of a means of public conveyance, particularly a rail vehicle, comprising a seat body (1; 15) of one or a plurality of different fiber reinforced, more particularly glass fiber reinforced plastic(s) (3; 30, 40, 60), with the seat body having a visible fabric insert (4; 20), of a colored, more particularly printed, design **characterized in that** the fabric insert (4; 20) is fully embedded in the plastic (3) or in one of the several plastics (30) or in the plastics.

2. A seat according to claim 1, wherein the seat body (1; 15), beneath the fabric insert (4; 20) of colored design, comprises further fabric inserts (8; 50) within the plastic (3, 40) or within the plastics, wherein the plastic / plastics (3, 40) is / are fiber reinforced by the fibers of the further fabric inserts (8; 50).

3. A seat according to one of the preceding claims, wherein the fabric insert (4; 20) of colored design is a glass fiber fabric.

4. A seat according to one of the preceding claims, wherein the plastic / plastics (3; 40, 60) is/are essentially a thermosetting plastic / thermosetting plastics.

5. A seat according to one of the preceding claims, wherein the seat body (15) comprises layers (30, 40) of a fiber reinforced plastic or of different fiber reinforced plastics (30, 40).

6. A seat according to claim 5, wherein one of the layers (30), preferably an outer layer, is reinforced by fibers of the fabric insert (20) of colored design.

7. A seat according to one of the preceding claims, wherein the fabric insert (4; 20) of colored design is embedded in a polyester resin.

8. A seat according to one of the preceding claims, wherein the plastic or one of the plastics or the plastics comprises / comprise a flame retarding agent.

9. A seat according to one of the preceding claims, wherein a protective layer (5) is applied to the plastic (3), to one of the plastics (30) or to the plastics of the seat body (1) on the side on the fabric insert (4; 20) of colored design.

10. A seat according to one of the preceding claims, wherein the seat body (1; 15) is a monobloc and comprises a seat (2) and a back (6).

11. A seat according to one of the preceding claims 1 to 9, wherein the seat body comprises several parts and, more particularly, is foldable.

12. A seat body (1; 15) of one or a plurality of different fiber reinforced, more particularly glass fiber reinforced plastic(s) (3; 30, 40, 60), with the seat body having a visible fabric insert (4; 20), of colored, more particularly printed, design
**characterized in that** the fabric insert (4; 20)
is fully embedded in the plastic (3) or in one of the several plastics (30) or in the plastics.

13. A rail vehicle comprising a seat as described in one of the preceding claims 1 to 11 or a seat body as described in claim 12.

14. A use of a seat as described in one of the preceding claims 1 to 11 or a seat body as described in claim 12 for a means of public conveyance or in public space.

15. A method for making a seat body comprising the following steps:
a) Placing a fabric insert (4) of colored design or a fabric insert without colored design in a negative mold of the seat body (1) and adapting the fabric insert to the negative mold,
b) Casting a thermosetting liquid reaction mixture on the fabric insert (4) until the fabric insert is embedded in the reaction mixture,
c) single or multiple repetition of the sequence of steps a) and b), wherein
- the same or different reaction mixtures are applied, and
- as last fabric insert, a fabric insert (4) of colored design is inserted when for the initial performance of step a) a fabric insert without colored design was placed in the negative mold,
d) Curing of the reaction mixture(s) to form a fiber reinforced thermosetting plastic.

## Revendications

1. Siège (13) pour l'habitacle d'un moyen de transport public, en particulier d'un véhicule sur rails, présentant un corps de siège (1 ; 15) composés d'une ou de plusieurs matières synthétiques (3 ; 30, 40, 60) différentes renforcées par des fibres, en particulier renforcées par des fibres de verre, dans lequel le corps de siège présente une garniture textile (4 ; 20) visible, présentant une configuration colorée, en particulier imprimée, **caractérisé en ce que** la garniture textile (4 ; 20) est incorporée en totalité dans la matière synthétique (3) ou dans l'une des différentes matières synthétiques (30) ou dans les matières synthétiques.

2. Siège selon la revendication 1, dans lequel le corps de siège (1 ; 15) présente, sous la garniture textile (4 ; 20) à configuration colorée, d'autres garnitures textiles (8 ; 50) à l'intérieur de la matière synthétique (3, 40) ou à l'intérieur des matières synthétiques, dans lequel la matière synthétique/les matières synthétiques (3, 40) est/sont renforcée(s) par les fibres des autres garnitures textiles (8 ; 50).

3. Siège selon l'une quelconque des revendications précédentes, dans lequel la garniture textile (4 ; 20) à configuration colorée est un tissu à base de fibres de verre.

4. Siège selon l'une quelconque des revendications précédentes, dans lequel la matière synthétique/les matières synthétiques (3 ; 40, 60) est/sont sensiblement une matière thermoplastique/des matières thermoplastiques.

5. Siège selon l'une quelconque des revendications précédentes, dans lequel le corps de siège (15) présente des couches (30, 40) composées de la matière synthétique renforcée par des fibres ou des différentes matières synthétiques (30, 40) renforcées par des fibres.

6. Siège selon la revendication 5, dans lequel une des couches (30), de préférence une couche extérieure, est renforcée par des fibres de la garniture textile (20) à configuration colorée.

7. Siège selon l'une quelconque des revendications précédentes, dans lequel la garniture textile (4 ; 20) à configuration colorée est incorporée dans une résine de polyester.

8. Siège selon l'une quelconque des revendications précédentes, dans lequel la matière synthétique ou une des matières synthétiques ou les matières synthétiques présente/présentent un agent retardateur de flammes.

9. Siège selon l'une quelconque des revendications précédentes, dans lequel une couche de protection (5) est appliquée sur la matière synthétique (3), sur une des matières synthétiques (30) ou sur les matières synthétiques du corps de siège (1) sur le côté de la garniture textile (4 ; 20) à configuration colorée.

10. Siège selon l'une quelconque des revendications précédentes, dans lequel le corps de siège (1 ; 15) est d'un seul tenant et présente un siège (2) et un dossier (6).

11. Siège selon l'une quelconque des revendications 1 - 9, dans lequel le corps de siège est en plusieurs parties, en particulier peut être rabattu.

12. Corps de siège (1 ; 15) composé d'une ou de plusieurs matière(s) synthétique(s) (3 ; 30, 40, 60) renforcée(s) par des fibres, en particulier renforcée(s) par des fibres de verre, dans lequel le corps de siège présente une garniture textile (4 ; 20) visible, à configuration colorée, en particulier imprimée, **caractérisé en ce que** la garniture textile (4 ; 20) est incorporée en totalité dans la matière synthétique (3) ou dans l'une des matières synthétiques (30) ou dans les matières synthétiques.

13. Véhicule sur rails présentant un siège tel que décrit dans l'une quelconque des revendications 1 - 11, ou un corps de siège tel que décrit dans la revendication 12.

14. Utilisation d'un siège tel que décrit dans l'une quelconque des revendications 1 - 11 ou d'un corps de siège tel que décrit dans la revendication 12 pour des moyens de transport publics ou pour l'espace public.

15. Procédé servant à fabriquer un corps de siège, présentant les étapes suivantes consistant à :
a) placer une garniture textile (4) à configuration colorée ou une garniture textile à configuration non colorée dans un moule négatif du corps de siège (1) et adapter la garniture textile au moule négatif ;
b) couler un mélange de réaction liquide pouvant durcir en une matière thermoplastique sur la garniture textile (4) de sorte que la garniture textile est incorporée dans le mélange de réaction ;
c) répéter une fois ou plusieurs fois la séquence des étapes a) et b),
- des mélanges de réaction identiques ou différents étant utilisés, et
- une garniture textile (4) à configuration colorée étant placée en tant que la dernière garniture textile si une garniture textile à configuration non colorée a été placée dans le moule négatif lors de la toute première mise en oeuvre de l'étape a) ;
d) durcir le/les mélange(s) de réaction en une matière thermoplastique renforcée par des fibres.
